(19) **Europäisches Patentamt**

**European Patent Office**

**Office européen des brevets**

(11) **EP 1 041 475 A2**

(12) **EUROPEAN PATENT APPLICATION**

(43) Date of publication:
04.10.2000 Bulletin 2000/40

(51) Int. Cl.⁷: **G05B 19/418**

(21) Application number: 00106853.5

(22) Date of filing: 30.03.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 01.04.1999 JP 9521599

(71) Applicant:
**TOYOTA JIDOSHA KABUSHIKI KAISHA Aichi-ken 471-8571 (JP)**

(72) Inventors:
• **Kaneko, Kuniya,**
**c/o Toyota Jidosha Kabushiki K.**
**Toyota-shi, Aichi-ken, 471-8571 (JP)**

• **Fujiyoshi, Hayaaki,**
**c/o Toyota Jidosha Kabushiki K**
**Toyota-shi, Aichi-ken, 471-8571 (JP)**
• **Kubota, Hiromi,**
**c/o Toyota Jidosha Kabushiki K.**
**Toyota-shi, Aichi-ken, 471-8571 (JP)**

(74) Representative:
**Winter, Brandl, Fürniss, Hübner, Röss, Kaiser, Polte**
**Partnerschaft**
**Patent- und Rechtsanwaltskanzlei**
**Alois-Steinecker-Strasse 22**
**85354 Freising (DE)**

(54) **Production and sales plan designing system**

(57)     A computer system(10) for mass-production is proposed to design a production plan based on information on orders. A process model (18) and a product model (20) are separately stored in the system. The process model (18) has an algorithm for estimating orders and determining a sales plan and a production plan. In the product model (20), pieces of information on products such as specifications and parts thereof are interrelated with one another. This alleviates the burden of updating software and enhances the extensibility of the system in case of a change in production conditions.

# FIG. 1

**EP 1 041 475 A2**

**Description**

## BACKGROUND OF THE INVENTION

### 1. Field of the Invention

The present invention relates to an art of production management, for example, for a mass-production system such as a group of assembly plants for automobiles. In particular the present invention relates to an art for designing a production plan indicating, if there are a plurality of production plants (factories) for producing a product, when to produce how many products in each of the production plants.

### 2. Description of the Related Art

For example there is known an art for designing a production plant as disclosed in Japanese Patent No. 278901. This art is intended to design a production plan for the present process in a mass-production system where parts produced in a process A (the present process) are transferred to a post-process B to be assembled and then transferred to a post-process C to be made into greater parts and eventually assembled into a product. The production plan is designed in consideration of the lead time of a truck service for transferring the parts from the present process to the post-processes.

The production plan is usually designed based on the information on orders because it is desirable to deliver the products by the deadline which is set when receiving orders. In the following description, the designing of a production plan based on the information on orders will be referred to as a process processing.

The process processing can be described mathematically. This mathematical description requires product-related information such as the products to be produced, the parts constituting the products, the plants where the parts are produced, the plants where the parts are assembled into the products. In other words, the description requires information such as specs of the products, specifications, component parts and production processes. In some cases, information on production conditions such as the lead time for producing parts and the number of lots for manufacturing parts may be required.

The process processing of the related art is mathematically described with the various data as mentioned above included. In general the information on products and production conditions is often changed. If the information undergoes some sort of change in the related art for designing a production plan, the entire description of the process processing needs to be reviewed and revised. For this reason a considerable burden is imposed in providing maintenance for the mathematical description (hereinafter referred to as a model). If new products or new production plants are added, the entire process model needs to be reviewed. Hence it is difficult to extend the system once the model has been constructed.

## SUMMARY OF THE INVENTION

The present invention has been made to solve the aforementioned problem. For this purpose the present invention is designed to separately construct a model for describing the base algorithm of a process processing and a model including the information (data) referred to in the base algorithm.

In accordance with one aspect of the present invention, there is provided a computer system for designing a production plan from information on orders of products. The system comprises processor that performs a processing for determining a production plan by referring to products data based on the information on the orders and a data base constructed independently from the process means to store the products data.

In the aforementioned aspect, since the information (data) on the products to be produced is constructed separately from the process model, it is possible to separately provide maintenance operations (updating, revision, modification and the like) for each model. Thus, the maintenance operations are facilitated and it becomes possible to enhance the overall processing speed and reduce the required memory capacity.

Because the data are separated from the process model, use of data compaction and the like achieves further enhancement of the processing speed and further reduction in required memory capacity.

The present invention can also be applied to the designing of a sales plan.

Although this summary does not describe all the features of the present invention, it should be understood that any combination of the features stated in the dependent claims is within the scope of the present invention.

## BRIEF DESCRIPTION OF THE DRAWINGS

The foregoing and further objects, features and advantages of the present invention will become apparent from the following description of a preferred embodiment with reference to the accompanying drawings, wherein:

Fig. 1 shows a hardware structure of a system used in an embodiment of the present invention;

Fig. 2 is an explanatory view of a process model and a product model of the present invention;

Fig. 3 shows an example of combination of vehicle type with vehicle specifications;

Fig. 4 shows an example of combination of vehicle type with vehicle specifications in accordance with the related art;

Fig. 5 shows an example of combination of vehicle type with vehicle specifications in accordance with the related art;

Fig. 6 shows an example of combination of vehicle type with vehicle specifications in accordance with the present invention;

Fig. 7 shows an example of combination of vehicle type with vehicle specifications in accordance with the present invention;

Fig. 8 is an explanatory view of the process model of the present invention;

Fig. 9 shows a procedure in the process model of the present invention; and

Figs. 10A and 10B are explanatory views of the process model of the present invention.

## DESCRIPTION OF PREFERRED EMBODIMENT

An embodiment of the present invention will be described hereinafter with reference to the drawings.

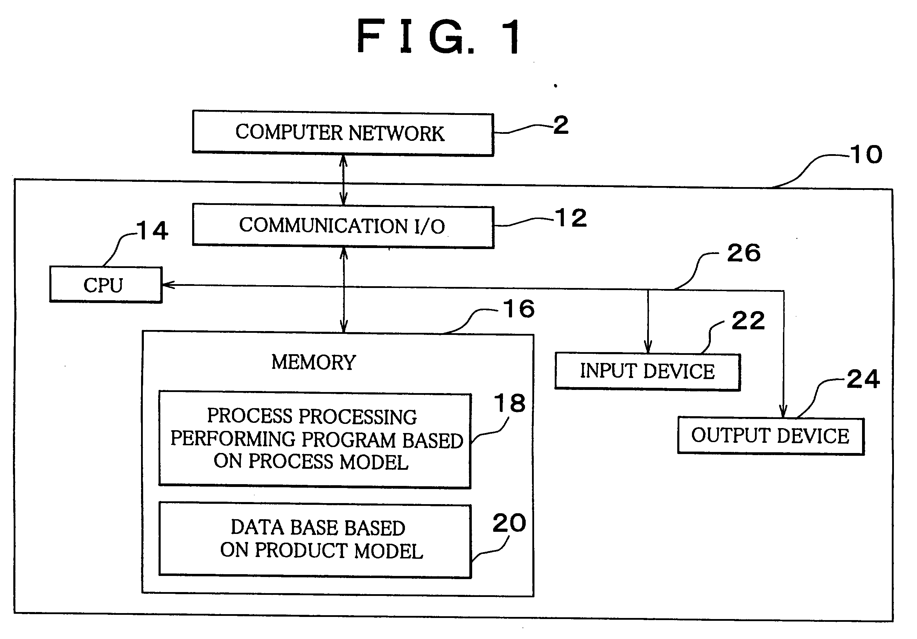

Fig. 1 shows a hardware structure of a computer system (a production plan designing system) 10 in accordance with the embodiment of the present invention. The production plan designing system 10 has a memory 16, an input device 22 and an output device 24 which are connected to a CPU 14 through a bus 26. The production plan designing system 10 is connected to an in-house computer network through a communication I/O 12. This enables the production plan designing system 10 to utilize various pieces of in-house information (e.g. sales data in the past, data as to the shift in ordered quantity in the past, data as to the sales plan of a new product and the like). On the contrary, the production plan designed by the production plan designing system 10 can be utilized from an in-house management computer.

A main program (a process model 18) and a product model 20 are stored in the memory 16. The main program performs the processing of designing a production plan based on order-related data. The product model 20 is a data base which is referred to when the process model 18 performs the processing.

The designing of a production plan based on order-related data requires various data such as parts of an ordered product, a plant where those parts are produced, and a production plant where the product is assembled. The process model 18 of this embodiment does not have the aforementioned data therein but performs the processing by referring to the product model 20 which is an external data base.

That is, the process model 18 of this embodiment is constructed based solely on a mathematical algorithm required to design a production plan on the basis of order-related data. Thus, even if there is a change in data in a production system, the process model 18 itself need not be subject to any modification. If the production system undergoes any modification, the only thing to be done is to renew the data concerning the product model 20.

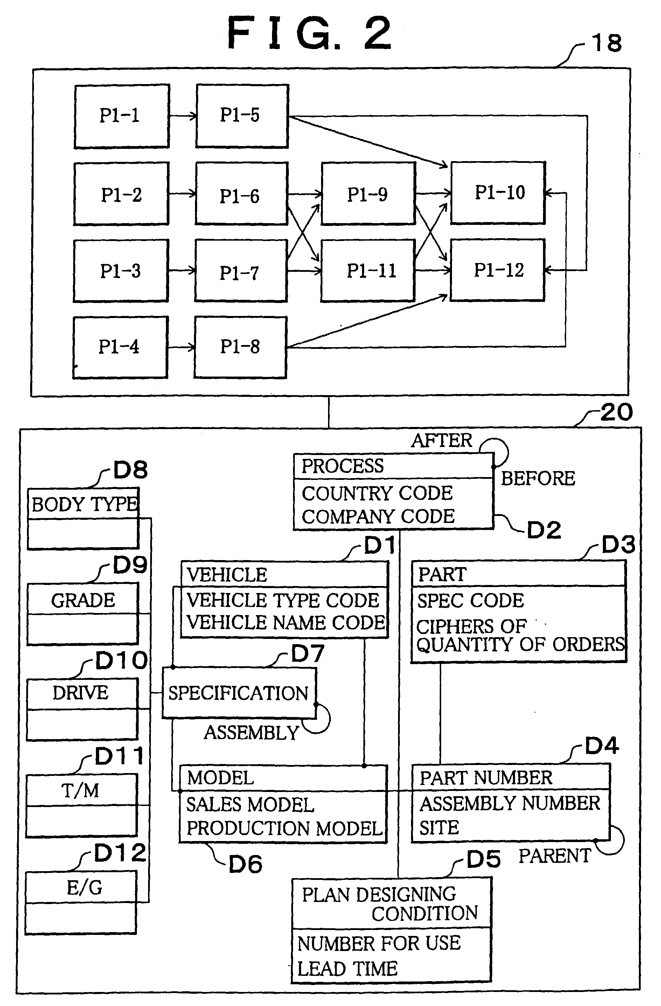

Fig. 2 shows one example of constructions of the process model and product model in designing a production plan for motor vehicles. Herein the process model 18 and the product model 20 are described in the manner of free topology.

The process model 18 includes the following processings:

P1-1: processing of estimating domestic orders of parts;

P1-2: processing of estimating domestic orders of vehicles;

P1-3: processing of estimating oversea orders of vehicles; and

P1-4: processing of estimating oversea orders of parts.

In these processings, the number of domestic orders of parts, the number of domestic orders of products (vehicles in this case), the number of oversea orders of parts and the number of oversea orders of vehicles in the future are estimated based on the data gathered through a computer network 2 (the order-related records in the past, the shift in the order-related records in the past, a plan for selling new products and the like). The process model 18 shown in Fig. 2 is constructed according to four categories, that is, according to whether orders have been given by a domestic client or an oversea client and whether the ordered article is a part or a product. However the present invention can also be applied to the case where there is only one type of order-related data.

The numbers of future orders estimated in the processings of P1-1 through P1-4 are respectively sent to:

P1-5: processing of designing a domestic sales plan for parts;

P1-6: processing of designing a domestic sales plan for vehicles;

P1-7: processing of designing an oversea sales plan for vehicles; and

P1-8: processing of designing an oversea sales plan for parts.

Each of the sales plan designing processings designs a sales plan conforming to the estimated number of orders.

The domestic sales plan for the vehicle designed in P1-6 is sent to:

P1-9: processing of designing a domestic production plan for vehicles; and

P1-11: processing of designing an oversea production plan for vehicles.

This is because of the necessity to fill part of the domestic orders with the products manufactured abroad.

By the same token, the oversea sales plan designed in P1-7 is sent to P1-9 as well as P1-11. This is because of the necessity to domestically manufacture and export some of the products ordered by an oversea client instead of manufacturing all of them abroad.

In the step of developing the sales plan into the production plan, reference is made to the number of stocks to design a production plan for confining the number of stocks into a suitable range. The lead time between production processes is taken into account in designing the production plan.

The domestic production plan for the vehicle designed in P1-9 is sent to:

P1-10: processing of designing a domestic production plan for parts; and

P1-12: processing of designing an oversea production plan for parts.

It is because parts manufactured abroad might be used to domestically produce a vehicle that the domestic production plan for vehicles designed in P1-9 is sent to P1-12. By the same token, the oversea production plan for vehicles designed in P1-11 is sent to P1-10 as well as P1-12.

Reference is also made herein to the number of stocks of a part so as to design a production plan for the part in which the number of stocks is confined to a suitable range. The lead time between part production processes is taken into account. In addition reference is also made to the data concerning the number of parts used for each product.

As described above, the process model 18 estimates the number of future orders and then designs a sales plan based on the estimated number. Subsequently the process model 18 designs a production plan required to put the sales plan into practice. The designing of the sales plan and production plan is described based on mathematical logic. The process processing program of this embodiment is constructed based on that style of description.

The designing of a sales plan from order-related information and the designing of a production plan from the sales plan require, in addition to an algorithm for development, various data which are referred to in executing the algorithm. The relation between the algorithm and the data will be described as follows. For example in the case of calculating the area (S) of a triangle from its base (a) and height (b), the area (S) cannot be calculated only through the algorithm for making calculation according to $S = (a \times b)/2$. The calculation of a concrete area requires concrete values (figures) of the base (a) and the height (b).

In this embodiment an algorithm is constructed in the process model 18, and the product model 20 stores therein data which are referred to in executing the algorithm.

The product model 20 includes various pieces of information on a production system requiring its plan in the form of a data base. This data base is described with a systematic data structure for ease of maintenance service such as the updating of a great deal of data.

The product model 20 stores vehicle information D1, a piece of information on a product to be produced. The vehicle information D1 has a vehicle name code and a vehicle type code indicative of a version of the vehicle. For example the vehicle information D1 includes a piece of information indicative of a specific version (vehicle type) of Toyota Crown (vehicle name).

The vehicle information D1 includes data indicative of a combination of specifications. To be more precise, for each one of a plurality of specifications, the combination of specifications D7 includes a set of classifications concerning body type D8, grade D9, drive system (2WD, full-time 4WD or the like), transmission D11 and engine D12 of a relevant vehicle. Thus, if one combination of specifications is specified, the vehicle can be specified.

The vehicle information also includes model information D6 which stores a sales model and a production model for each vehicle type specified by a vehicle name and its version.

Because a plan is designed for parts as well as vehicles in this embodiment, information on parts is also stored. Part information D3 includes a spec code and the number of ciphers of an order for each part. For some parts there exists part number information D4. If a part is composed of "smaller parts", the part number information D4 includes a set of part numbers of those smaller parts.

The product model 20 further stores process information D2 which indicates, for each vehicle specified by a vehicle name and its version, a production plant thereof in the form of a country code and a company code. Ultimate products to be manufactured (vehicles in this embodiment) are manufactured in a plurality of companies within a certain group. For this reason company codes are necessitated. The process information also includes information on production plants of parts and is systematized according to the sequence of production from parts to products. To simplify explanation, it is assumed that a gear A and a gear B (parts in a preceding process) are combined to produce a gear train C (a part in the present process) and that the gear train C is combined with other parts to manufacture a transmission D. In this case the process information on the gears A and B is expressed as "the information preceding the process information on the gear train C", and the process information on the gear train C is expressed as "the information preceding the process information on the transmission D". In this manner the process information is described with a recursive data structure. Thus, the memory capacity required for data storage is diminished to make the data structure easy to understand and facilitate operations including the updating of data.

Moreover the product model 20 has a part-related data block D3. The part data block D3 is a data base of parts required for production expressed in the form of a spec code and the number of ciphers of each order.

A data base D4 regarding part numbers is expressed in the form of an assembly number and a site. As is the case with the process information, the data base D4 also employs a recursive data structure so that the memory capacity required for data storage is diminished with a view to making the data structure easy to recognize and facilitating maintenance operations including the updating of the data base.

A plan designing condition D5 is also stored in the process model 20 in the form of a data base. This data base stores processes in which parts with their respective part numbers are used, the numbers of the respective parts required for each vehicle model, and the lead time between processes which are interrelated with one another.

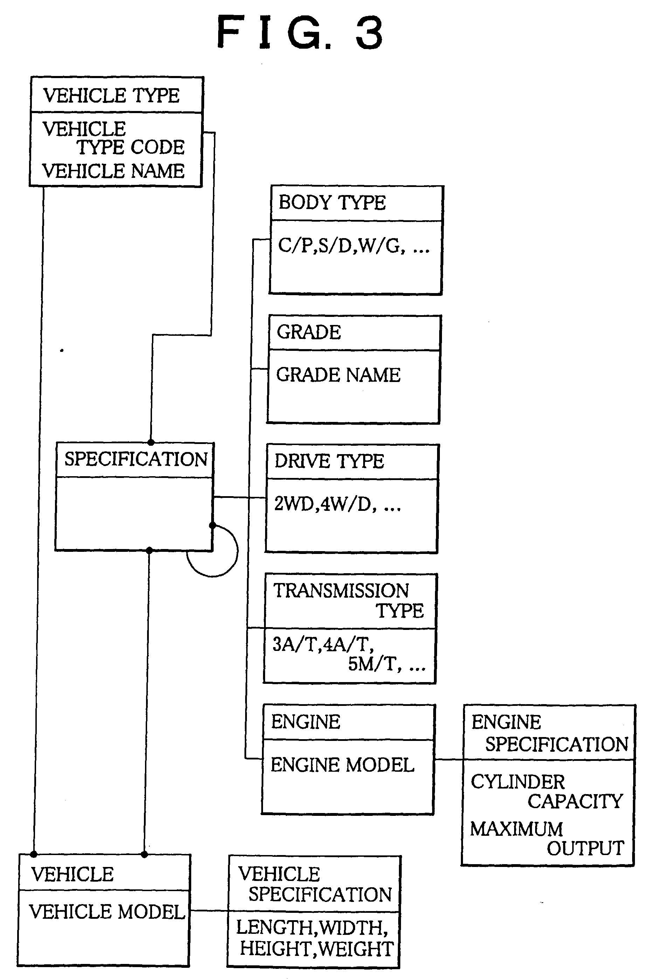

Fig. 3 shows an example of a product model used in designing a sales plan or a production plan for a vehicle. A combination of specifications (classifications concerning body type, grade, drive type, transmission type, engine type and the like) is described herein for one vehicle model.

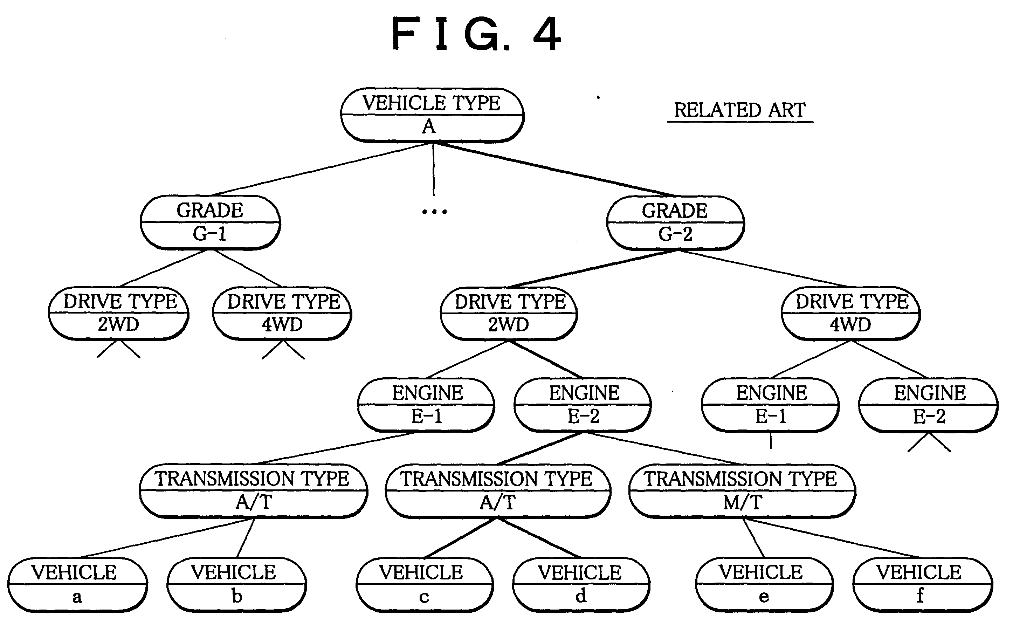

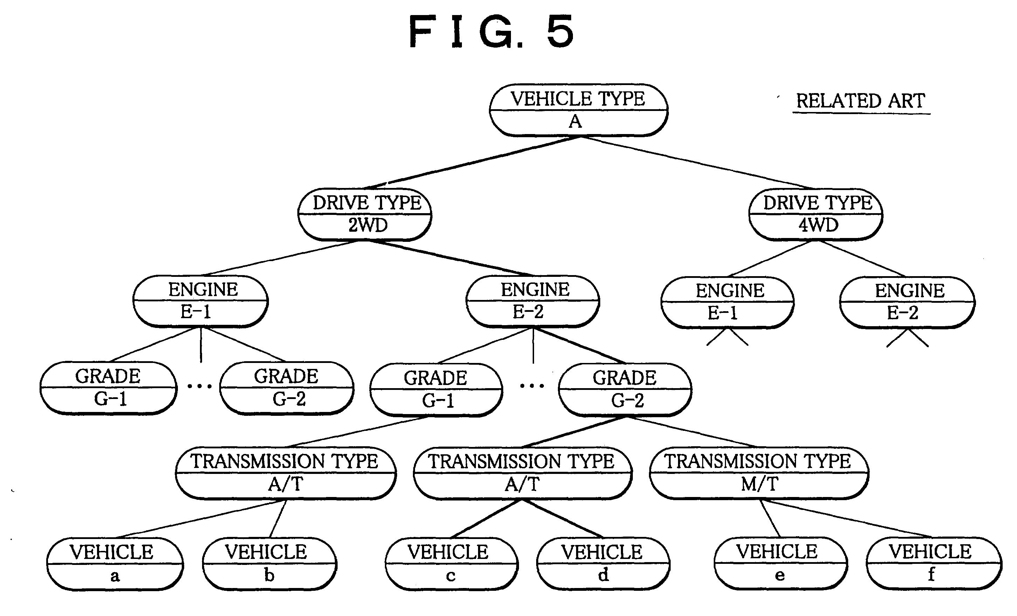

A data structure in accordance with the related art for specifying a vehicle from vehicle type information is shown for example in Figs. 4 and 5. Referring to Fig. 4, this data structure is unfolded in the sequence of vehicle type, grade, drive type, engine type and transmission type. Referring to Fig. 5, this data structure is unfolded in the sequence of vehicle type, drive type, engine type, grade and transmission type.

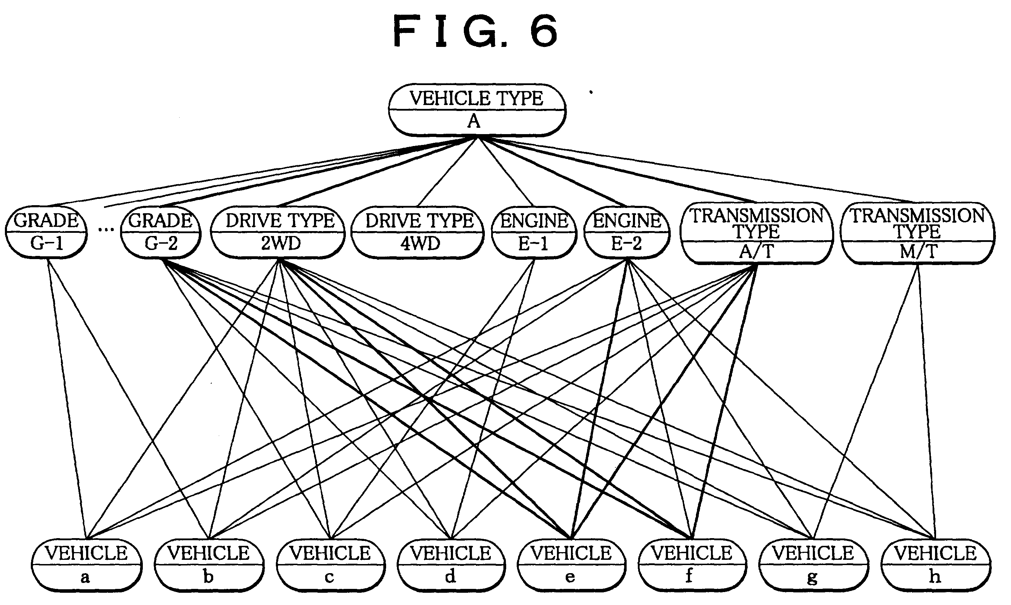

Fig. 6 shows a relation among vehicle type, combination of specifications, and vehicle in this embodiment. The data structure shown in Fig. 6 is simplified in comparison with those shown in Figs. 4 and 5. In particular, since the structure shown in Fig. 6 only requires updating relevant portions in altering data, operations for conserving or maintaining the data base are facilitated.

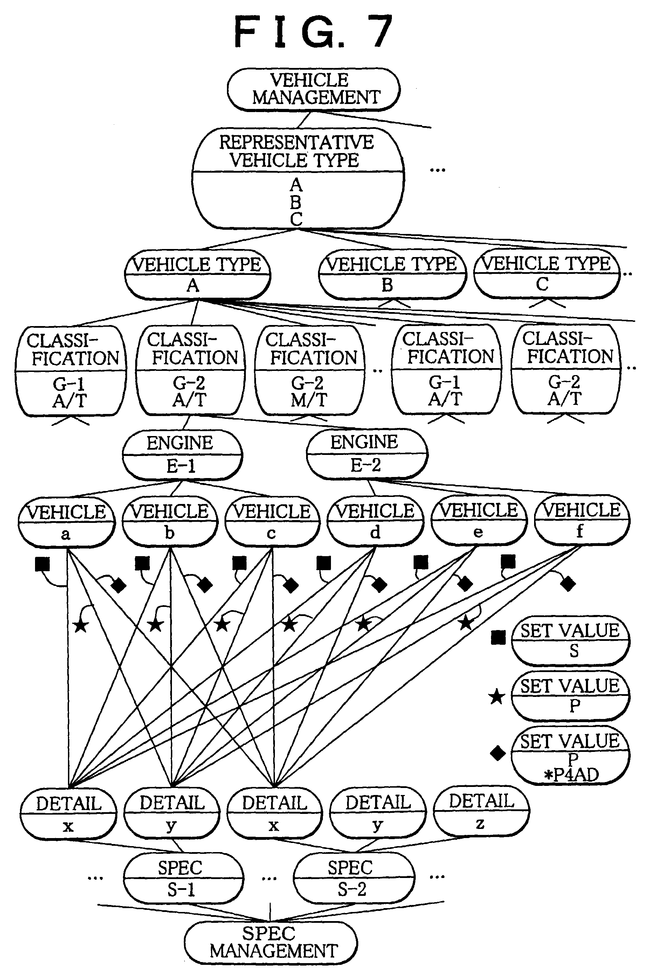

Use of a data structure shown in Fig. 7 instead of that shown in Fig. 6 also makes it possible to simply describe what is inherently a highly complex relation.

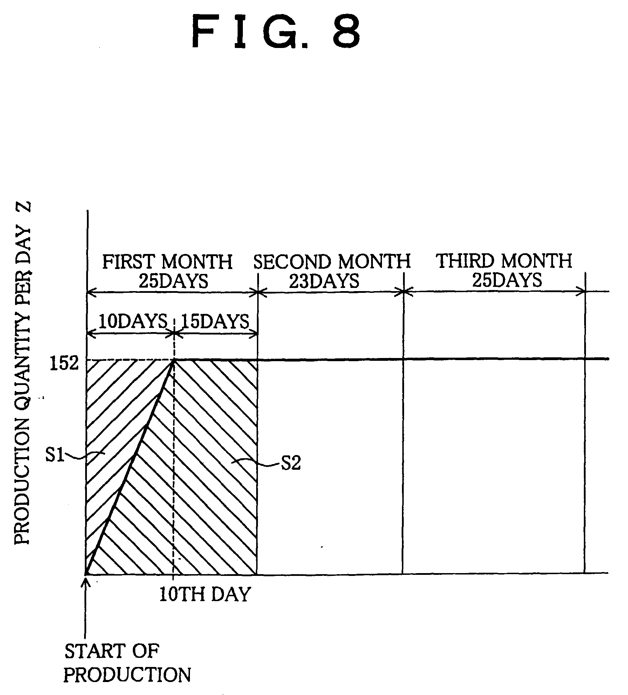

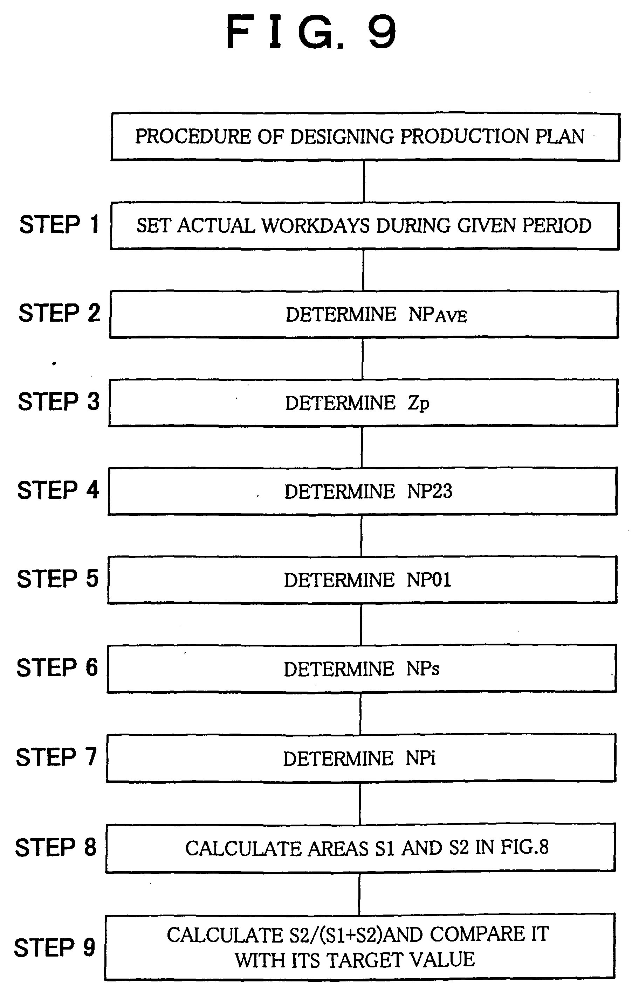

Next in connection with the process of designing a production plan immediately after the start of production of products, the algorithm processed by the process model 18 will be described with reference to Figs. 8 and 9.

The following plan designing condition will be described as an example.

1) Production period: three months.
2) Target production quantity: 10,000.
3) After the start of production, the production quantity per day is gradually increased.
4) A balanced production quantity is reached ten days (actual workdays) after the date of the start of production.
5) The areas S1 and S2 shown in Fig. 8 are adjusted so that S2/(S1 + S2) becomes equal to 90%.

Fig. 9 shows a process of designing a production plan satisfying the above-mentioned conditions.

First of all in step 1, actual workdays during a plan designing period (three months) are set for example as follows:

first month: 25 days;
second month: 23 days; and
third month: 25 days.

Next in step 2, the average production quantity $NP_{AVE}$ per day required to attain a target production quantity during the aforementioned period is calculated as follows:

average production quantity $NP_{AVE}$ = target production quantity / actual workdays during production period
= 10,000/(25 + 23+ 25)
= 136,98/day.

In step 3, the provisional value Zp of a stable-period production quantity Z is calculated based on $NP_{AVE}$ as follows:

stable-period production quantity (provisional value) $Zp = NP_{AVE/X}$.

For example, if x is substituted by 0.9, it follows that Zp = 136.98/0.9 = 152.2/day.

In step 4, the sum NP23 of the product quantities in the second and third months when manufactured in the balanced production quantity Zp estimated in step 3 is calculated as follows:

production quantity NP23 = Zp $\times$ (actual workdays in the second and third months)
= 152.2 $\times$ (23 + 25)
= 7,305.

Next in step 5, the required production quantity NP01 from the start of production to the beginning of the first month is calculated as follows:

production quantity NP01 = target production quantity - NP23
= 10,000 - 7,305
= 2,695

Next in step 6, the required stable-period production quantity NPs (from the 10th day to the 25th day) in the first month is calculated as follows:

production quantity NPs = Zp $\times$ actual workdays
= 152 $\times$ 16
= 2,432.

Next in step 7, the required increase-period production quantity NPi immediately after the start of production (from the first day to the ninth day) is calculated as follows:

production quantity NPi = Np01 - NPs
= 2,695 - 2,432
= 260

Next in step 8, the areas S1 and S2 shown in Fig. 8 are calculated as follows:

S1 = (Zp $\times$ increase period (actual workdays))/2
= (152 $\times$ 9)/2
= 684

S2 = NPs + S1
= 2,432 + 684
= 3,116

Next in step 10, the value of S2/(S1 + S2) is calculated and compared with the target value (90%) given in the condition 5) as follows:

S2/(S1 + S2) = 3,119/(3,119 + 684)
= 82%.

In this case, since the target value is 90%, the (provisional) stable-period production quantity calculated in step 3 is reviewed and the procedures in steps 3 through 10 are repeated to find a stable-period production quantity in which S2/(S1 + S2) approaches 90%.

If products are produced at a plurality of plants, the following procedures are carried out in the present invention.

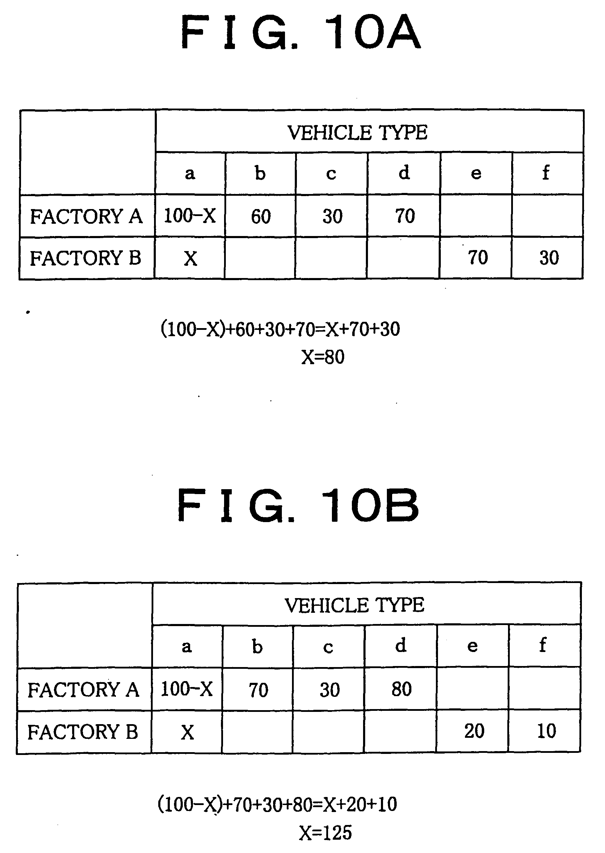

Fig. 10A schematically and simply shows a processing ready for the process model 18 for application to such a case. This processing handles an example in which a quota of production quantities are allotted to factories A and B in producing a total of 100 vehicles of type (a) which can be produced in these factories. A quota of production quantities of vehicles of types (b) through (f) are already allotted to the factories. It is assumed that both the factories have an equal production capacity. There is a rule that at least one vehicle must be produced in each of the production plants where vehicles of that type can be produced.

In this case X may be calculated so that the sum of production quantities becomes equal in both the factories. That is, it follows that X = 80, that 20 vehicles of type (a) are allotted to the factory A, and that 80 vehicles of type (a) are allotted to the factory B.

On the other hand, in the case where production quantities of vehicles of type (b) through (f) are allotted as shown in Fig. 10B, X = 125. However this case is unrealistic because it follows that -25 vehicles of type (a) are produced in the factory A and that 125 vehicles of type (a) are produced in the factory B. Therefore the aforementioned rule is applied to this case so that one vehicle is allotted to the factory A and that 99 vehicles are allotted to the factory B.

The process model 18 in this embodiment can store other algorithms for designing the optimal production plan under various conditions. For example the process model 18 can store an algorithm for optimally determining, upon receipt of an order, (a) whether to fill the order with stocks, (b) whether to produce the products domestically, (c) whether to produce the products abroad, (d) whether to use stocks of the parts required to produce the products, (e) whether to produce the parts domestically, (f) whether to produce the parts abroad and the like. This makes it possible to determine the optimal production plant and the optimal mode of production in accordance with each order and design a production plan for each production plant.

Because data required to execute the algorithm are stored in another region as the product model 20 in the form of a data base, operations such as the updating of the data are significantly facilitated.

According to the present invention which has been described hitherto, since a program for executing an algorithm and data required to execute the program are constructed separately, the software can be conserved and maintained easily and inexpensively. Thus it becomes possible to construct a system which has high extensibility. In addition, the memory capacity can be reduced and the processing speed can be increased.

While the present invention has been described with reference to what is presently considered to be a preferred embodiment thereof, it is to be understood that the present invention is not limited to the disclosed embodiment or construction. On the contrary, the present invention is intended to cover various modifications and equivalent arrangements. In addition, while the various elements of the disclosed invention are shown in various combinations and configurations which are exemplary, other combinations and configurations, including more, less or only a single embodiment, are also within the spirit and scope of the present invention.

**Claims**

1. A computer system (10) for designing a production plan from information on orders of products, characterized by comprising:

    process means (18) for performing a processing for determining a production plan by referring to products data based on the information on the orders; and
    a data base (20) constructed independently from the process means to store the products data.

2. The system (10) according to claim 1, wherein:

    the process means (18) includes at least one order estimation means (P1-1, P1-2, P1-3, P1-4) for estimating a quantity of future orders, at least one sales plan determination means (P-5, P-6, P1-7, P1-8) for determining a sales plan for the products based on an estimated result, and at least one production plan determination means (P1-9, P1-10, P1-11, P1-12) for determining a production plan for the products based on the sales plan; the sales plan determination means (P1-5, P1-6, P1-7, P1-8) and the production plan determination means (P1-9, P1-10, P1-11, P1-12) refer to the products data stored in the database during performance of the processing.

3. The system (10) according to claim 2, wherein:

    the order estimation means (P1-1, P1-2, P1-3, P1-4) includes domestic order estimation means (P1-1, P1-2) and oversea order estimation means (P-3, P-4);

the sales plan determination means (P1-5, P1-6) includes domestic sales plan determination means and oversea sales plan determination means (P1-7, P-8); and

the production plan determination means (P1-9, P1-10, P1-11, P1-12) includes domestic production plan determination means (P1-9, P1-10) and oversea production plan determination means (P1-11, P1-12).

4. The system (10) according to claim 2, wherein:

the products data include at least one of specifications, parts and production processes of products; and pieces of the products data are interrelated with one another in the database (20).

5. The system (10) according to any one of claims 1 to 3, wherein:

the process means (18) determines, when there are a plurality of production plants, a production quantity in each of the production plants.

6. A computer system (10) for designing a sales plan from information on orders of products, characterized by comprising:

process means (18) having order estimation means (P1-1, P1-2, P1-3, P-14) for estimating a quantity of orders based on information on orders and sales plan determination means (P1-5, P1-6, P1-7, P1-8) for determining a sales plan by referring to products data including at least specifications of the products; and a data base (20) constructed independently from the process means to store the products data.

7. A method for designing a production plan from information on orders of products, characterized by comprising:

determining a production plan by referring to products data based on the information on the orders; and storing the products data in an independent database (20).

8. The method according to claim 7 characterized by further comprising

estimating a quantity of future orders by referring to the information (P1-1, P1-2, P1-3, P1-4); determining a sales plan for the products based on an estimated result (P1-5, P1-6, P1-7, P1-8); and determining a production plan for the products based on the sales plan (P1-9, P1-10, P1-11, P1-12), wherein the sales plan and the production plan are determined by referring to the products data stored in the database (20).

9. The method according to claim 8, wherein:

the estimating step estimates domestic future order (P1-1, P1-2) and oversea future order (P1-3, P1-4); the sales plan determining step determines domestic sales plan (P1-5, P1-6) and oversea sales plan (P1-6, P1-7); and the production plan determining step determines domestic production plan (P1-9, P1-10) and oversea production plan (P1-11, P1-12).

10. The method according to claim 8, wherein:

the products data includes at least one of specifications, parts and production processes of products; and pieces of the products data are interrelated with one another in the database (20).

11. The method according to any one of claims 7 to 9, wherein:

a production quantity in each of the production plants is determined when there are a plurality of production plants.

# FIG. 1

COMPUTER NETWORK — 2

10

COMMUNICATION I/O — 12

14 — CPU

26

MEMORY — 16

22

INPUT DEVICE

18 — PROCESS PROCESSING PERFORMING PROGRAM BASED ON PROCESS MODEL

24 — OUTPUT DEVICE

20 — DATA BASE BASED ON PRODUCT MODEL

EP 1 041 475 A2

# FIG. 2

18

P1-1 → P1-5

P1-2 → P1-6 → P1-9 → P1-10

P1-3 → P1-7 → P1-11 → P1-12

P1-4 → P1-8

20

**D8**

BODY TYPE

**D9**

GRADE

**D10**

DRIVE

**D11**

T/M

**D12**

E/G

AFTER

**D2**

PROCESS

COUNTRY CODE
COMPANY CODE

BEFORE

**D1**

VEHICLE

VEHICLE TYPE CODE
VEHICLE NAME CODE

**D3**

PART

SPEC CODE

CIPHERS OF
QUANTITY OF ORDERS

**D7**

SPECIFICATION

ASSEMBLY

**D6**

MODEL

SALES MODEL
PRODUCTION MODEL

**D4**

PART NUMBER

ASSEMBLY NUMBER
SITE

**D5** PARENT

PLAN DESIGNING
CONDITION

NUMBER FOR USE
LEAD TIME

# FIG. 3

| VEHICLE TYPE |
|---|
| VEHICLE TYPE CODE |
| VEHICLE NAME |

| BODY TYPE |
|---|
| C/P,S/D,W/G, ... |

| GRADE |
|---|
| GRADE NAME |

| SPECIFICATION |
|---|
|  |

| DRIVE TYPE |
|---|
| 2WD,4W/D, ... |

| TRANSMISSION TYPE |
|---|
| 3A/T,4A/T, 5M/T, ... |

| ENGINE |
|---|
| ENGINE MODEL |

| ENGINE SPECIFICATION |
|---|
| CYLINDER CAPACITY |
| MAXIMUM OUTPUT |

| VEHICLE |
|---|
| VEHICLE MODEL |

| VEHICLE SPECIFICATION |
|---|
| LENGTH,WIDTH, HEIGHT,WEIGHT |

# FIG. 4

EP 1 041 475 A2

# FIG. 5

RELATED ART

VEHICLE TYPE
A

DRIVE TYPE
2WD

DRIVE TYPE
4WD

ENGINE
E-1

ENGINE
E-2

ENGINE
E-1

ENGINE
E-2

GRADE
G-1

GRADE
G-2

GRADE
G-1

GRADE
G-2

TRANSMISSION TYPE
A/T

TRANSMISSION TYPE
A/T

TRANSMISSION TYPE
M/T

VEHICLE
a

VEHICLE
b

VEHICLE
c

VEHICLE
d

VEHICLE
e

VEHICLE
f

EP 1 041 475 A2

FIG. 6

# F I G. 7

# F I G. 8

# FIG. 9

| | PROCEDURE OF DESIGNING PRODUCTION PLAN |
|---|---|
| STEP 1 | SET ACTUAL WORKDAYS DURING GIVEN PERIOD |
| STEP 2 | DETERMINE $NP_{AVE}$ |
| STEP 3 | DETERMINE $Z_p$ |
| STEP 4 | DETERMINE $NP23$ |
| STEP 5 | DETERMINE $NP01$ |
| STEP 6 | DETERMINE $NP_s$ |
| STEP 7 | DETERMINE $NP_i$ |
| STEP 8 | CALCULATE AREAS S1 AND S2 IN FIG.8 |
| STEP 9 | CALCULATE $S2/(S1+S2)$ AND COMPARE IT WITH ITS TARGET VALUE |

# F I G. 10A

| | VEHICLE TYPE | | | | | |
|---|---|---|---|---|---|---|
| | a | b | c | d | e | f |
| FACTORY A | 100-X | 60 | 30 | 70 | | |
| FACTORY B | X | | | | 70 | 30 |

$$(100-X)+60+30+70=X+70+30$$
$$X=80$$

# F I G. 10B

| | VEHICLE TYPE | | | | | |
|---|---|---|---|---|---|---|
| | a | b | c | d | e | f |
| FACTORY A | 100-X | 70 | 30 | 80 | | |
| FACTORY B | X | | | | 20 | 10 |

$$(100-X)+70+30+80=X+20+10$$
$$X=125$$